# EUROPEAN PATENT APPLICATION

(11) **EP 3 232 407 A2**
(43) Date of publication of application: **18.10.2017**
(21) Application number: 17161127.0
(22) Date of filing: 15.03.2017
(51) Int. Cl.: G07C 5/08, B64D 45/00, G06Q 10/00

(54) **VALIDATING FLIGHT CHECKLIST ITEMS FOR MAINTENANCE AND INSPECTION**

(30) Priority: 11.04.2016 US 201615095263
(71) Applicant: Honeywell International Inc., Morris Plains, NJ 07950 (US)
(72) Inventor: REDDY, Mahipal, Morris Plains,NH 07950 (US)
(74) Representative: Houghton, Mark Phillip

(57) **Abstract**

A method for completing a flight checklist for an aircraft is provided. The method obtains, by one or more location sensors, location information for a user; generates a tagged user location, based on the location information; determines that a checklist item is incomplete, based on the tagged user location, wherein the flight checklist comprises the checklist item, and wherein the checklist item is associated with a maintenance inspection for the aircraft; and when the checklist item is incomplete, presenting an alert via a display device.

## Description

### TECHNICAL FIELD

Embodiments of the subject matter described herein relate generally to verifying completion of flight checklist items. More particularly, embodiments of the subject matter relate to analyzing user location data and image data to verify appropriate completion of flight checklist items.

### BACKGROUND

Flight checklists play an important role in verifying health conditions of aircraft hardware and equipment, located on the exterior and the interior of an aircraft. Flight checklists are also used to ensure that the aircraft is ready to enter particular phases of flight. Each flight checklist requires performance of a particular aircraft inspection by completing checklist items in a recommended order, and improper completion of each flight checklist may lead to safety issues during flight. Errors of commission occur when flight crew members believe that a checklist item has been configured as prescribed, but in reality this has not been done. Additionally, during maintenance repair inspections or "audits", a flight crew member may be unable to see or reach a particular section of an aircraft, rendering the inspection incomplete. In some circumstances, due to heavy work load pressure, certain flight checklist items may be overridden to produce a temporary work around solution. Here, human errors, procedural errors, and/or a lack of experience handling flight checklists or maintenance operations may contribute to in-flight incidents and safety issues.

Accordingly, it is desirable to provide a mechanism for verifying that flight checklist items have been completed and/or completed correctly. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method for completing a flight checklist for an aircraft. The method obtains, by one or more location sensors, location information for a user; generates a tagged user location, based on the location information; determines that a checklist item is incomplete, based on the tagged user location, wherein the flight checklist comprises the checklist item, and wherein the checklist item is associated with a maintenance inspection for the aircraft; and when the checklist item is incomplete, presents an alert via a display device.

Some embodiments provide a system for completing a flight checklist for an aircraft, the system comprising: a system memory element; location information sensors, configured to obtain location information for a user; a display device, configured to present an alert; and at least one processor communicatively coupled to the system memory element, the location information sensors, and the display device, the at least one processor configured to: tag the location information, to generate a tagged user location; determine that a checklist item is incomplete, based on the tagged user location, wherein the flight checklist comprises the checklist item, and wherein the checklist item is associated with a maintenance inspection for the aircraft; and initiate presentation of the alert, via the display device, to indicate that the checklist item is incomplete.

Some embodiments provide a non-transitory, computer-readable medium containing instructions thereon, which, when executed by a processor, perform a method. The method identifies incomplete maintenance inspection items for an aircraft, based on a location history for a user and locations for maintenance inspection items of a flight checklist, wherein the maintenance inspection items comprise the incomplete maintenance inspection items; and presents, via a display device, alerts for each of the incomplete maintenance inspection items.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a system for performing aircraft inspections, including a flight checklist verification system, in accordance with the disclosed embodiments;
FIG. 2 is a functional block diagram of a flight checklist verification system, in accordance with the disclosed embodiments;
FIG. 3 is a flow chart that illustrates an embodiment of a process for completing a flight checklist for a maintenance inspection of an aircraft;
FIG. 4 is a flow chart that illustrates an embodiment of a process for determining that a checklist item is incomplete, based on a tagged user location;
FIG. 5 is a flow chart that illustrates an embodiment of a process for performing an inspection of completed flight checklist items; and
FIG. 6 is a flow chart that illustrates an embodiment of a process for detecting a degree of completion of a checklist item.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The present disclosure presents methods and apparatus for validating flight checklist data by verifying completion and/or correctness of completion of aircraft maintenance tasks. Such aircraft maintenance tasks are generally presented as a list or registry of items on a flight checklist. Generally, original equipment manufacturer (OEM) and/or an particular airline provide flight checklists which include recommended process steps or guidelines to be followed step-by-step. Completion of flight checklist items may be verified by determining whether a user has been physically present at the location of the aircraft hardware or equipment associated with each flight checklist item. Correct completion of an aircraft repair may be verified by comparing images of a repaired section of the aircraft to stored default images of the same section of the aircraft in an ideal state.

Certain terminologies are used with regard to the various embodiments of the present disclosure. An aircraft inspection is may be performed using a flight checklist, and may include the performance of various maintenance tasks associated with preparing the aircraft for flight, for a particular phase of flight, or for post-flight repair and maintenance procedures. A flight checklist may be implemented as: a pre-flight checklist, a maintenance checklist, a maintenance repair inspection checklist, and/or any other checklist applicable to aircraft flight preparation. A checklist item is also referred to as a flight checklist item or a maintenance inspection item, and may include a flight inspection task, an aircraft maintenance task, an inspection task for a previously-performed maintenance task, or any other task associated with a flight checklist.

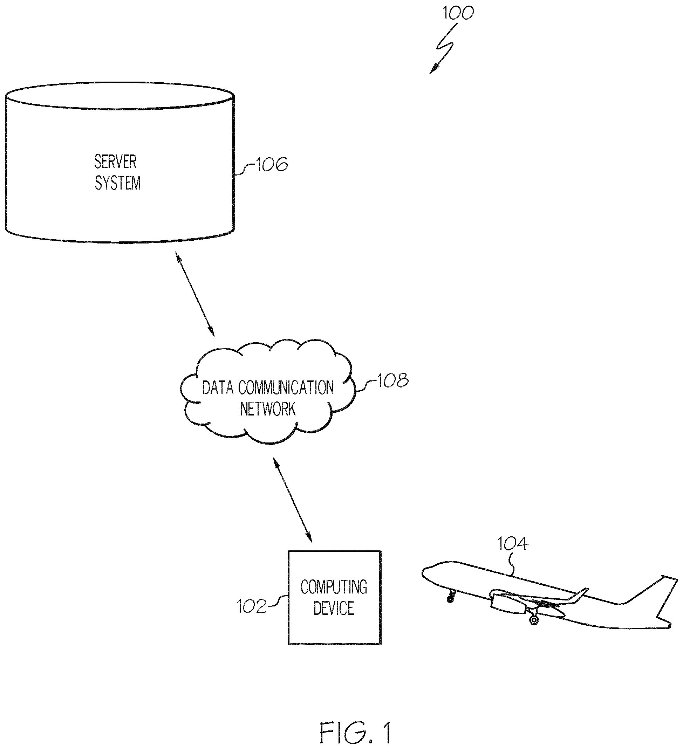

Turning now to the figures, FIG. 1 is a diagram of a system 100 for performing aircraft inspections, including a flight checklist verification system, in accordance with the disclosed embodiments. As shown, the system 100 may include a computing device 102 which may be used during maintenance inspections of an aircraft 104. Such maintenance inspections may include completion of pre-flight inspections, post-flight inspections, repair inspections, or any other type of inspection for which a user may examine one or more parts, hardware, and/or equipment of the aircraft 104 to ensure the physical or structural integrity of the aircraft 104. The aircraft 104 may be implemented using any fixed wing and/or rotary wing aircraft, remote pilot device, drone, spacecraft, hovercraft, or any other vehicle associated with maintenance inspections or flight checklists. The computing device 102 may be implemented using a personal or handheld computer, such as a tablet computer, a smartphone, a smartwatch, a personal digital assistant (PDA), a laptop computer, or any other computing device which may be carried by a user during inspection of the aircraft 104. Some embodiments of the computing device 102 may be implemented using a camera-enabled, near-to-eye (NTE) display communicatively coupled to an external computer or including a built-in computer. In certain embodiments, the computing device 102 may be configured to execute software applications associated with flight inspection completion, such as an Electronic Flight Bag (EFB) software application.

As shown, the computing device 102 communicates with a server system 106 to obtain additional data during or after maintenance inspections (i.e., completion of flight checklists) of the aircraft 104. The server system 106 may include any number of application servers, and each server may be implemented using any suitable computer. In some embodiments, the server system 106 includes one or more dedicated computers. In some embodiments, the server system 106 includes one or more computers carrying out other functionality in addition to server operations. The server system 106 may store information, including location data associated with aircraft equipment or hardware referenced by each flight checklist item; stored default image data associated with each flight checklist item; location tags for each flight checklist item; stored user location data; and any other information which may be used by the system 100 to validate flight checklist completion and/or aircraft repair performance.

The computing device 102 may transmit data to, and receive data from, the server system 106 via a data communication network 108. The data communication network 108 may be any digital or other communications network capable of transmitting messages or data between devices, systems, or components. In certain embodiments, the data communication network 108 includes a packet switched network that facilitates packet-based data communication, addressing, and data routing. The packet switched network could be, for example, a wide area network, the Internet, or the like. In various embodiments, the data communication network 108 includes any number of public or private data connections, links or network connections supporting any number of communications protocols. The data communication network 108 may include the Internet, for example, or any other network based upon TCP/IP or other conventional protocols. In various embodiments, the data communication network 108 could also incorporate a wireless and/or wired telephone network, such as a cellular communications network for communicating with mobile phones, personal digital assistants, and/or the like. The data communication network 108 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

The computing device 102 of the system 100 may be carried by a user during a first inspection or a repair inspection of the aircraft 104. The computing device 102 may be used to present flight checklist items to a user, so that the user completes the flight checklist items during the applicable inspection. The computing device 102 receives user input indicating completion of each flight checklist item, and flags each of these flight checklist items as "completed" items. The computing device 102 is configured to determine whether a flight checklist item is complete by comparing location data for each flight checklist item, obtained from the server system 106, to user location data. Here, the computing device 102 is configured to determine whether each flight checklist item is complete by determining whether the user has been physically present at an associated location for each flight checklist item. The computing device 102 is further configured to determine the "correctness" of an aircraft equipment repair by obtaining image data at aircraft equipment at locations for each of the flight checklist items, accessing stored default images for the aircraft equipment at the server system 106, and comparing the sets of images.

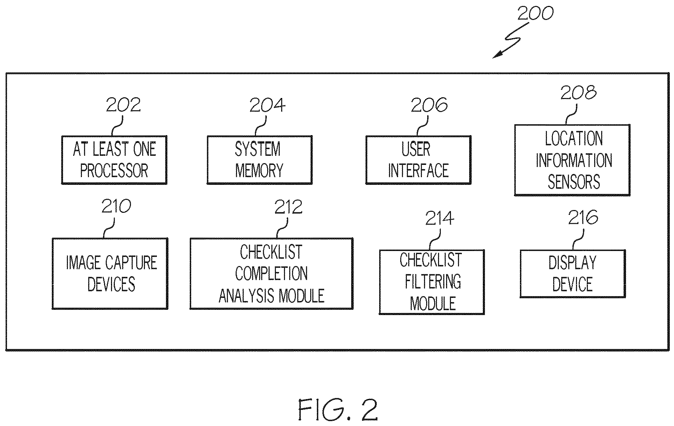

FIG. 2 is a functional block diagram of a flight checklist verification system 200, in accordance with the disclosed embodiments. It should be noted that the flight checklist verification system 200 can be implemented with the computing device 102 depicted in FIG. 1. In this regard, the flight checklist verification system 200 shows certain elements and components of the computing device 102 in more detail.

The flight checklist verification system 200 may include, without limitation: at least one processor 202; system memory 204; a user interface 206; location information sensors 208; one or more image capture devices 210; a checklist completion analysis module 212; a checklist filtering module 214; and a display device 216. These elements and features of the flight checklist verification system 200 may be operatively associated with one another, coupled to one another, or otherwise configured to cooperate with one another as needed to support the desired functionality, as described herein. For ease of illustration and clarity, the various physical, electrical, and logical couplings and interconnections for these elements and features are not depicted in FIG. 2. Moreover, it should be appreciated that embodiments of the flight checklist verification system 200 will include other elements, modules, and features that cooperate to support the desired functionality. For simplicity, FIG. 2 only depicts certain elements that relate to the maintenance inspection verification techniques described in more detail below·.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 communicates with system memory 204. The system memory 204 may be used to store image data associated with predefined aircraft locations, user location data, and/or location data associated with particular items of a flight checklist. The system memory 204 may be realized using any number of devices, components, or modules, as appropriate to the embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the at least one processor 202. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the flight checklist verification system 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone or other voice capture device, or any device, component, or function that enables the user to select options, input information, or otherwise control the operation of the flight checklist verification system 200. For example, the user interface 206 could be manipulated by an operator to make menu selections for purposes of viewing a flight checklist, a filtered flight checklist, notifications or alerts associated with flight checklist items, or the like.

In certain embodiments, the user interface 206 may include or cooperate with various features to allow a user to interact with the flight checklist verification system 200 via graphical elements rendered on a display element. Accordingly, the user interface 206 may initiate the creation, maintenance, and presentation of a graphical user interface (GUI). In certain embodiments, the display element implements touch-sensitive technology for purposes of interacting with the GUI. Thus, a user can manipulate the GUI by moving a cursor symbol rendered on the display element, or by physically interacting with the display element itself for recognition and interpretation, via the user interface 206.

The location information sensors 208 are configured to provide location information for a user, which indicates whether a user is physically present in a particular location that is associated with a particular maintenance inspection item or flight checklist item. In certain embodiments, the location information sensors 208 may be implemented using a triangulated location sensor device, such as a global positioning system (GPS), which provides user location information for a user positioned outside an aircraft. In some embodiments, the location information sensors 208 may be implemented using an indoor location sensor system, which provides user location information for a user positioned inside an aircraft. In this scenario, the indoor location sensor system may be implemented using a triangulated position determined using a Bluetooth Low Energy network, a Wi-Fi network, or the like, as described in the following references, incorporated herein by reference: (i) Bluetooth Enables In-door Mobile Location Services, S. Thongthammacharl and H. Olesen Center for Tele-Information, vol. 3, Apr. 2003, pp. 2023-2027; (ii) Design and Analysis of a Bluetooth-based Indoor Localization System, Raffaele Bruno and Franca Delmastro, Proc. Personal Wireless Communication (PWC 2003), Venezia, Italy, Sep. 2003; (iii) Compass: A Probabilistic Indoor Positioning System Based on 802.11 and Digital Compasses, Thomas King, Stephan Kopf, Thomas Haenselmann, Christian Lubberger, and Wolfgang Effelsberg, in Proc. of 1st ACM Intl Workshop on Wireless Network Testbeds, Experimental Evaluation and Characterization (WiNTECH), Los Angeles, USA, Sep. 2006; (iv) On Indoor Position Location With Wireless LANs, P. Prasithsangaree, P. Krishnamurthy, P.K. Chrysanthis, in Proc. of 13th IEEE Intl Symposium on Personal Indoor and Mobile Radio Communications, Sep. 2002; (v) Positioning with Bluetooth, Joseph Hallberg, Marcus Nilsson, Kare Synnes, Proc 10th Untl Conference on Telecommunication, 2003.

In some embodiments, the location information sensors 208 may be implemented using eye-tracking sensors configured to provide a gaze position for a user, which may be used to determine whether the user is viewing particular aircraft hardware or equipment associated with a particular maintenance inspection item or flight checklist item.

The one or more image capture devices 210 are configured to obtain image data associated with each flight checklist item of a flight checklist. Each flight checklist item is associated with aircraft parts, hardware, or equipment. In certain embodiments, each flight checklist item is associated with a dedicated image capture device 210, which is positioned to view the aircraft equipment applicable to the particular flight checklist item. In other embodiments, image capture devices 210 may be positioned such that each image capture device 210 may rotate or otherwise change position in order to capture images associated with one or more flight checklist items. The image capture devices 210 may obtain still-frame image data and/or video image data. In some embodiments, the image capture devices 210 may obtain image data and transmit the image data to the system memory 204 or other data storage location for future retrieval and analysis. The image capture devices 210 may be configured to obtain image data according to a timed interval schedule, or to obtain image data when a user is physically present at the tagged user location. Some embodiments of the one or more image capture devices 210 may be implemented using a camera-enabled, head-worn device (e.g., NTE), or a camera-enabled mobile computing device (e.g., a tablet computer or smartphone). In this scenario, the one or more image capture devices 210 may be configured to capture image data when the user arrives at a particular location associated with a flight checklist item (i.e., a maintenance item or a maintenance inspection item on a flight checklist).

The checklist completion analysis module 212 is configured to determine whether flight checklist items are complete based on analysis of user location data and whether or not a user has been physically present at a location associated with each of the flight checklist items. The checklist completion analysis module 212 is also configured to determine whether a completed checklist item (i.e., a completed aircraft repair) has been sufficiently completed such that the flight checklist item may be determined to be complete. The checklist completion analysis module 212 may use user location data, flight checklist item location data, flight checklist item image data, or the like.

The checklist filtering module 214 is configured to filter a flight checklist of incomplete and complete checklist items, to generate a list of complete flight checklist items only. Each complete flight checklist item is for a maintenance task that has been performed. In other words, a complete flight checklist item is for a section of the aircraft has already been repaired. The checklist filtering module 214 filters the entirety of the flight checklist to generate a new flight checklist of complete checklist items for repairs that have already been performed, which may be used to verify the completed repairs or in other quality assurance activities.

In practice, the checklist completion analysis module 212 and/or the checklist filtering module 214 may be implemented with (or cooperate with) the at least one processor 202 to perform at least some of the functions and operations described in more detail herein. In this regard, the checklist completion analysis module 212 and/or the checklist filtering module 214 may be realized as suitably written processing logic, application program code, or the like.

The display device 216 is configured to present alerts and notifications related to maintenance inspection items and flight checklist items. In some embodiments, the display device 216 may be implemented using a laptop computer display, a smartphone or tablet computer display, or another display associated with a computing device (such as that described above with regard to FIG. 1). In some embodiments, the display device 216 may be implemented using a head-worn display, such as a near-to-eye (NTE) display, smart-glasses, smart-goggles, or other head-worn display capable of presenting notifications and alerts related to incomplete or insufficiently complete maintenance inspection items and/or flight checklist items.

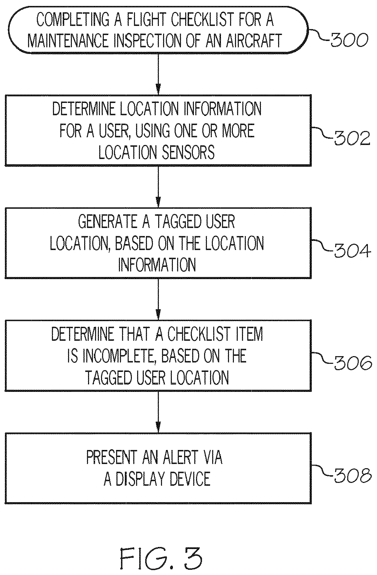

FIG. 3 is a flow chart that illustrates an embodiment of a process 300 for completing a flight checklist for a maintenance inspection of an aircraft. First, the process 300 determines location information for a user, using one or more location sensors (step 302). The location information is obtained via location information sensors, and indicates a physical location for the user. In some embodiments, the location information may include outdoor location information external to an aircraft, at which the user is physically located. The outdoor location information may be associated with a particular flight checklist item or a particular maintenance inspection item. Outdoor location information may include a triangulated position for the user, such as GPS data for a user location. In some embodiments, the location information may include indoor location information indicating a physical location internal to an aircraft, at which the user is physically located. Like outdoor location information, the indoor location information may be associated with a particular flight checklist item or a particular maintenance inspection item. In some embodiments, the location information may include gaze position information indicating a location at which the user is visually focused. Gaze position information may include eye-tracking sensor data, head-tracking sensor data, or any other sensor data that specifies a visual location or a direction that a user's head may be facing.

In some embodiments, the location information (e.g., outdoor location information, indoor location information, and/or gaze position information) may be obtained via user input data. For example, the process 300 may receive user input data when the user arrives at a particular location, which indicates the location of the user. User input data may be obtained by the process 300 via a voice input device (e.g., a microphone), a graphical user interface, or other type of user interface (described previously with regard to FIG. 2).

Some embodiments of the process 300 verify the location information obtained via location information sensors and/or user input location data. For example, the process 300 may compare the user location information to a three-dimensional (3D) model of the applicable aircraft to verify the identified user location.

Next, the process 300 generates a tagged user location, based on the location information (step 304). Here, the process 300 "geo-tags" the image of a particular location to indicate that the image is associated with the particular location. The tag for the image data is a location tag, and provides identification for any image data captured at the particular location.

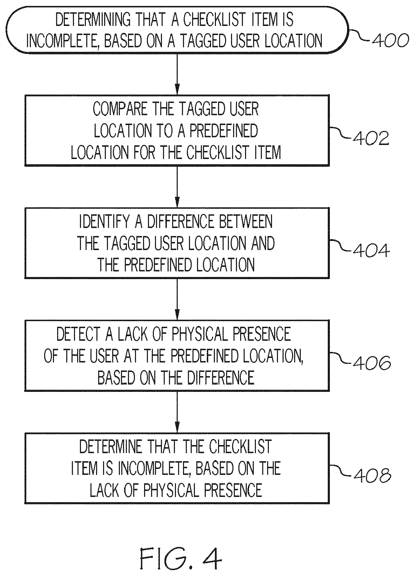

The process 300 then determines that a checklist item is incomplete, based on the tagged user location (step 306). One suitable methodology for determining that a checklist item is incomplete is described below with reference to FIG. 4. A checklist item is also referred to as a flight checklist item or a maintenance inspection item, and may include a flight inspection task, an aircraft maintenance task, an inspection task for a previously-performed maintenance task, or any other task associated with a flight checklist. Flight checklists may include, without limitation: pre-flight checklists, maintenance checklists, maintenance repair inspection checklists, and/or any other checklist applicable to aircraft flight preparation. Here, the process 300 determines that the user was not physically present at a location associated with the flight checklist item, and therefore, the flight checklist item could not have been completed by the user. After determining that the checklist item is incomplete (step 306), the process 300 presents an alert via a display device (step 308), wherein the alert indicates that the checklist item is incomplete. Some embodiments of the process 300 present a visual and/or auditory notification, so that corrections can be made to the flight checklist item.

By performing steps 302-308, the process 300 identifies incomplete maintenance inspection items (i.e., flight checklist items) for an aircraft, based on a location history for a user and locations for maintenance inspection items of the flight checklist, and alerts the user to the incomplete maintenance inspection items. In some embodiments, the process 300 may obtain a plurality of user locations for the user, tag the plurality of user locations to generate a plurality of tagged user locations, and determines that a subset of the maintenance inspection items is incomplete, based on the plurality of tagged user locations. Here, the process 300 compares the plurality of tagged user locations to a plurality of predefined locations for the maintenance inspection items and identifies differences between the tagged locations and the predefined locations, and detects the subset, based on the differences. In this embodiment, the process 300 compares a complete location history for the user to a list of predefined locations, and may present multiple alerts based on the multiple comparisons.

FIG. 4 is a flow chart that illustrates an embodiment of a process 400 for determining that a checklist item is incomplete, based on a tagged user location. It should be appreciated that the process 400 described in FIG. 4 represents one embodiment of step 306 described above in the discussion of FIG. 3, including additional detail. First, the process 400 compares the tagged user location to a predefined location for the checklist item (step 402). The tagged user location is obtained using location information sensors, and may include an outdoor location external to an aircraft, an indoor location internal to an aircraft, and/or a gaze position which indicates a location of visual focus of the user. Each checklist item is associated with a predefined location. Here, the process 400 accesses a database or other form of data storage that includes a plurality of checklist items and associated, predefined location data for each of the plurality of checklist items.

Next, the process 400 identifies a difference between the tagged user location and the predefined location (step 404), and then detects a lack of physical presence of the user at the predefined location, based on the difference (step 406). Here, the process 400 recognizes that the tagged user location is not the same as the predefined location associated with the checklist item, and thus, the user was not physically present at the predefined location for the checklist item.

The process 400 then determines that the checklist item is incomplete, based on the lack of physical presence (step 408). The process 400 recognizes that the checklist item was not completed by the user when the user was not physically present at the location of the checklist item, and therefore the user could not have completed the checklist item.

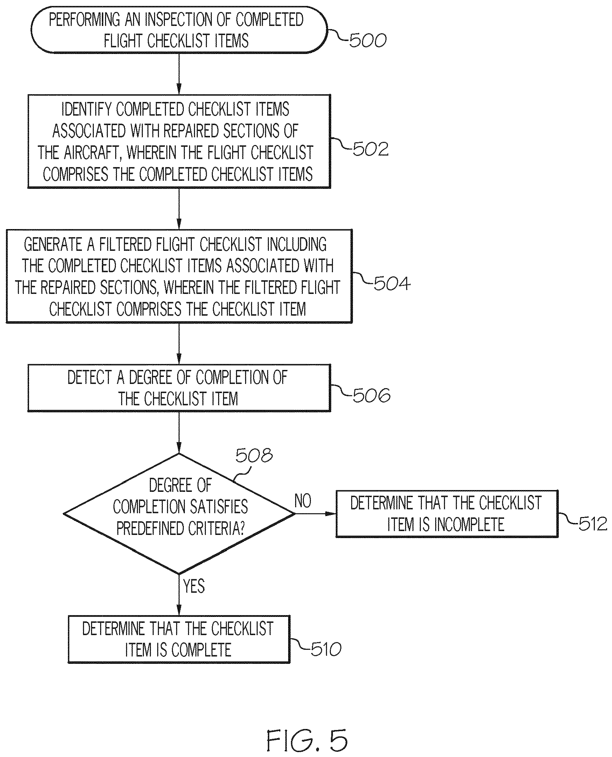

FIG. 5 is a flow chart that illustrates an embodiment of a process 500 for performing an inspection of completed flight checklist items. First, the process 500 identifies completed checklist items associated with repaired sections of the aircraft, wherein the flight checklist comprises the completed checklist items (step 502). A checklist item may be a maintenance task, and a completed checklist item indicates that the maintenance task has been completed and thus the aircraft section associated with the checklist item has already been repaired. Here, the process 500 evaluates a flight checklist and identifies the checklist items that have already been completed.

Next, the process 500 generates a filtered flight checklist including the completed checklist items associated with the repaired sections, wherein the filtered flight checklist comprises the checklist item (step 504). The process 500 filters the flight checklist, which includes completed checklist items and incomplete checklist items, to generate the filtered flight checklist of completed checklist items. The newly-generated, filtered flight checklist provides a registry of repaired sections of the aircraft, which may be referenced during a re-inspection or verification that the completed repairs were correctly performed.

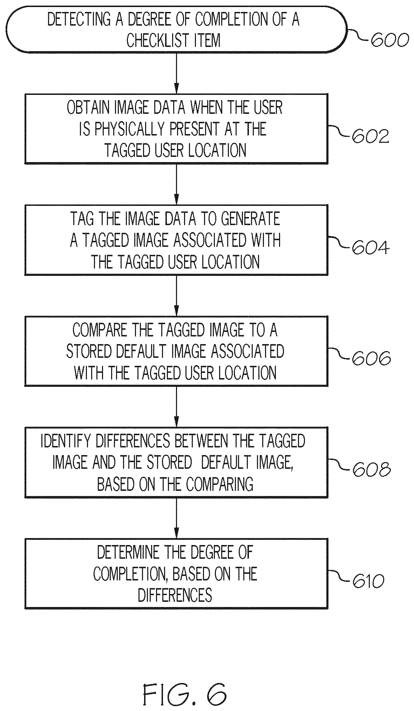

The process 500 then detects a degree of completion of the checklist item (step 506). One suitable methodology for detecting a degree of completion for the checklist item is described below with reference to FIG. 6. Using computer vision technologies (e.g., image capture), image recognition, and voice recognition, the process 500 records and analyzes the repair procedure against the actual recommendations presented via a flight checklist to determine the degree of completion of each flight checklist item.

Next, the process 500 determines whether the degree of completion satisfies predefined criteria (decision 508). Here, the process 500 may compare images of a particular location of the aircraft to stored, default images (i.e., ideal 2D or 3D images) associated with the particular equipment, hardware, or other part of the aircraft applicable to a particular flight checklist item. In certain embodiments, captured image data may be stored for later retrieval and potential use in verifying completion of flight checklist items. When the process 500 determines that the degree of completion satisfies predefined criteria (the "Yes" branch of 508), the process 500 determines that the checklist item is complete (step 510). However, when the process 500 determines that the degree of completion does not satisfy predefined criteria (the "No" branch of 508), the process 500 determines that the checklist item is incomplete (step 512).

FIG. 6 is a flow chart that illustrates an embodiment of a process 600 for detecting a degree of completion of a checklist item. It should be appreciated that the process 600 described in FIG. 6 represents one embodiment of step 506 described above in the discussion of FIG. 5, including additional detail. First, the process 600 obtains image data when the user is physically present at the tagged user location (step 602). The image data may include still image data, video image data, or any other image data which displays the section of the aircraft for which a repair has been completed.

Next, the process 600 tags the image data to generate a tagged image associated with the tagged user location (step 604). The process 600 "geo-tags" the image of a particular location to indicate that the image is associated with the particular location. The tag for the image data is a location tag, and provides identification for any image data captured at the particular location.

The process 600 then compares the tagged image to a stored default image associated with the tagged user location (step 606). Using the tag as an identifier, the process 600 compares the tagged, captured image data to a stored default image which is also associated with the same location tag. Here, the process 600 may access a database or other data storage structure configured to store a set of images for each section of the aircraft. Each stored image may be tagged, or in other words, each stored image may be associated with a respective location tag which indicates a particular location for each of the stored default images. Next, the process 600 identifies differences between the tagged image and the stored default image, based on the comparing (step 608), and the process 600 then determines the degree of completion, based on the differences (step 610).

The various tasks performed in connection with processes 300-600 may be performed by software, hardware, firmware, or any combination thereof. For illustrative purposes, the preceding descriptions of processes 300-600 may refer to elements mentioned above in connection with FIGS. 1-2. In practice, portions of processes 300-600 may be performed by different elements of the described system. It should be appreciated that processes 300-600 may include any number of additional or alternative tasks, the tasks shown in FIGS. 3-6 need not be performed in the illustrated order, and processes 300-600 may be incorporated into a more comprehensive procedure or process having additional functionality not described in detail herein. Moreover, one or more of the tasks shown in FIGS. 3-6 could be omitted from an embodiment of the processes 300-600 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. A module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for completing a flight checklist for an aircraft, the method comprising:
obtaining, by one or more location sensors, location information for a user;
generating a tagged user location, based on the location information;
determining that a checklist item is incomplete, based on the tagged user location,
wherein the flight checklist comprises the checklist item, and wherein the checklist item is associated with a maintenance inspection for the aircraft; and
when the checklist item is incomplete, presenting an alert via a display device.

2. The method of Claim 1, wherein determining that the checklist item is incomplete further comprises:
comparing the tagged user location to a predefined location for the checklist item;
identifying a difference between the tagged user location and the predefined location; and
detecting that the checklist item is incomplete, based on the difference.

3. The method of Claim 2, wherein determining that the checklist item is incomplete further comprises recognizing a lack of physical presence of the user at the predefined location, based on the difference; and
wherein the lack of physical presence at the predefined location indicates that an incomplete status for the checklist item.

4. The method of Claim 1, wherein obtaining the location information for the user further comprises detecting a triangulated position of the user, wherein the location information comprises the triangulated position; and
wherein determining that the checklist item is incomplete further comprises:
comparing the triangulated position to a predefined triangulated position associated with the checklist item to identify a match; and
when a match is not identified, determining that the checklist item is incomplete.

5. The method of Claim 1, wherein obtaining the location information for the user further comprises detecting an indoor location of the user, wherein the location information comprises the indoor location; and
wherein determining that the checklist item is incomplete further comprises:
comparing the indoor location to a predefined indoor location associated with the checklist item to identify a match; and
when a match is not identified, determining that the checklist item is incomplete.

6. The method of Claim 1, wherein obtaining the location information for the user further comprises detecting a gaze position of the user, wherein the location information comprises the gaze position; and
wherein determining that the checklist item is incomplete further comprises:
comparing the gaze position to a predefined gaze position associated with the checklist item to identify a match; and
when a match is not identified, determining that the checklist item is incomplete.

7. The method of Claim 1, further comprising:
identifying completed checklist items associated with repaired sections of the aircraft, wherein the flight checklist comprises the completed checklist items;
generating a filtered flight checklist including the completed checklist items associated with the repaired sections, wherein the filtered flight checklist comprises the checklist item;
detecting a degree of completion of the checklist item; and
when the degree of completion does not satisfy predefined criteria, determining that the checklist item is incomplete.

8. The method of Claim 7, wherein detecting the degree of completion of the checklist item further comprises:
obtaining image data when the user is physically present at the tagged user location;
tagging the image data to generate a tagged image associated with the tagged user location;
comparing the tagged image to a stored default image associated with the tagged user location;
identifying differences between the tagged image and the stored default image, based on the comparing; and
determining the degree of completion, based on the differences.

9. A system for completing a flight checklist for an aircraft, the system comprising:
a system memory element;
location information sensors, configured to obtain location information for a user;
a display device, configured to present an alert; and
at least one processor communicatively coupled to the system memory element, the location information sensors, and the display device, the at least one processor configured to:
tag the location information, to generate a tagged user location;
determine that a checklist item is incomplete, based on the tagged user location, wherein the flight checklist comprises the checklist item, and wherein the checklist item is associated with a maintenance inspection for the aircraft; and
initiate presentation of the alert, via the display device, to indicate that the checklist item is incomplete.

10. The system of Claim 9, wherein the at least one processor is further configured to:
compare the tagged user location to a predefined location for the checklist item;
identify a difference between the tagged user location and the predefined location; and
detect that the checklist item is incomplete, based on the difference.

11. The system of Claim 9, wherein the at least one processor is further configured to:
identify completed checklist items associated with repaired sections of the aircraft, wherein the flight checklist comprises the completed checklist items; and
generate a filtered flight checklist including the completed checklist items associated with the repaired sections, wherein the filtered flight checklist comprises the checklist item.

12. The system of Claim 11, further comprising an image capture device communicatively coupled to the at least one processor, wherein the image capture device is configured to obtain image data when the user is physically present at the tagged user location; and
wherein the at least one processor is further configured to:
tag the image data to generate a tagged image associated with the tagged user location;
compare the tagged image to a stored default image associated with the tagged user location to identify differences; and
determine whether completion of the checklist item is correct, based on the differences;
wherein, when the completion of the checklist item is not correct, the indication comprises the alert.

13. The system of Claim 9, the location sensors further comprising a global positioning system (GPS) configured to obtain a triangulated position for the user, wherein the location information comprises the triangulated position; and
wherein the at least one processor is further configured to:
compare the triangulated position to a predefined triangulated position associated with the checklist item to identify a match; and
when a match is not identified, determine that the checklist item is incomplete.

14. The system of Claim 9, the location sensors further comprising an indoor location system configured to obtain an indoor location of the user, wherein the location information comprises the indoor location; and
wherein the at least one processor is further configured to:
compare the indoor location to a predefined indoor location associated with the checklist item to identify a match; and
when a match is not identified, determine that the checklist item is incomplete.

15. The system of Claim 9, the location sensors further comprising an eye-tracking device configured to obtain a gaze position of the user, wherein the location information comprises the gaze position; and
wherein the at least one processor is further configured to:
compare the gaze position to a predefined gaze position associated with the checklist item to identify a match; and
when a match is not identified, determine that the checklist item is incomplete.
